(19) Europäisches Patentamt
European Patent Office
Office européen des brevets

(11) EP 2 547 714 B1

(12) **EUROPEAN PATENT SPECIFICATION**

(45) Date of publication and mention of the grant of the patent:
**27.07.2016 Bulletin 2016/30**

(21) Application number: **11707878.2**

(22) Date of filing: **14.03.2011**

(51) Int Cl.:
***C08G 65/00*** *(2006.01)*

(86) International application number:
**PCT/EP2011/053796**

(87) International publication number:
**WO 2011/113792 (22.09.2011 Gazette 2011/38)**

(54) **PROCESS FOR THE PRODUCTION OF POLYETHER POLYOLS WITH A HIGH ETHYLENE OXIDE CONTENT**

VERFAHREN ZUR HERSTELLUNG VON POLYETHERPOLYOLEN MIT HOHEM ETHYLENOXIDGEHALT

PROCÉDÉ DE PRODUCTION DE POLYÉTHER POLYOLS AYANT UNE TENEUR ÉLEVÉE EN OXYDE D’ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2010 US 725631**

(43) Date of publication of application:
**23.01.2013 Bulletin 2013/04**

(73) Proprietors:
- **Covestro Deutschland AG**
  **51373 Leverkusen (DE)**
- **Covestro LLC**
  **Pittsburgh, PA 15205 (US)**

(72) Inventors:
- **LORENZ, Klaus**
  **41539 Dormagen (DE)**
- **HOFMANN, Jörg**
  **47800 Krefeld (DE)**
- **KLESCZEWSKI, Bert**
  **51069 Köln (DE)**
- **REESE, Jack**
  **Hurricane**
  **West Virginia 25526 (US)**
- **PAZOS, Jose**
  **Charleston**
  **West Virginia 25304 (US)**

(74) Representative: **Levpat**
**c/o Covestro AG**
**Alfred-Nobel-Straße 10**
**40789 Monheim am Rhein (DE)**

(56) References cited:
**WO-A1-00/04071**
**WO-A1-00/64963**
**WO-A1-90/00180**
**WO-A1-97/29146**
**WO-A1-98/03571**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 547 714 B1

## Description

BACKGROUND OF THE INVENTION

This invention relates to a process for the production of polyether polyols with an OH number of from 15 to 120 mg of KOH/g, to the polyether polyols produced by this process and to flexible polyurethane foams produced from these polyether polyols. These polyether polyols are prepared in the presence of double metal cyanide (DMC) catalysts and have a high content of ethylene oxide units (oxyethylene units).

Flexible polyurethane foams are foams which counteract pressure with low resistance. Flexible polyurethane foams are open-celled, permeable to air and reversibly deformable. The properties of flexible polyurethane foams depend on the structure of the polyether polyols, polyisocyanates and additives, such as catalysts and stabilizers, used for their production. With respect to the polyether polyol(s), the functionality, the chain length, the epoxides used (propylene oxide (PO) and ethylene oxide (EO) are of particular importance) and the ratio of the epoxides employed have a great influence on the processability of the polyether polyols and on the properties of the flexible polyurethane foams produced from those polyether polyols. Polyether polyols which are suitable for the production of flexible polyurethane foams generally have a hydroxyl functionality of from 2.2 to 4.0. These polyether polyols are obtained by addition of either propylene oxide exclusively or a mixture of propylene oxide/ethylene oxide having a propylene oxide content of at least 70 wt.% on to a starter compound with an appropriate hydroxyl functionality. For the production of a number of polyurethane foams, such as soft, hypersoft foams and viscoelastic foams and for cell opening, however, polyether polyols with a high ethylene oxide content (i.e., ethylene oxide contents of > 70 wt.%) are also employed. These polyether polyols with high contents of oxyethylene units typically have a 3-block structure. A "3-block structure" is a polyether polyol in which the starter compound (e.g., glycerol) is first lengthened with exclusively propylene oxide (PO) so that a pure PO block is formed, then reacted with a mixture of ethylene oxide (EO) and propylene oxide (PO) to form a mixed block with random distribution of the EO and PO units (such a mixed block is also called a "random EO/PO mixed block") and then reacted with ethylene oxide exclusively in a third step to obtain a pure EO block at the chain end. The third step is also referred to as "EO cap" in the following. These polyether polyols with a 3-block structure generally have > 70 wt.% oxyethylene units.

In the prior art, preparation of polyether polyols is conventionally carried out by base-catalyzed (e.g., KOH) polyaddition of epoxides on to polyfunctional starter compounds. The polyether polyols can be prepared with a high content of oxyethylene units having a 3-block structure without problems by KOH catalysis. A disadvantage is, however, that after the polyaddition has ended, the pH basic catalyst must be removed from the polyether polyol in a very involved process, e.g., by neutralization, distillation and filtration. The catalyst residues must be thoroughly removed from the polyether polyols to avoid undesirable side reactions, such as formation of polyisocyanurate structures, during foaming. Further, flexible foams based on polyols which have been prepared by the base-catalyzed process do not generally have optimum long-term use properties.

Catalysis with double metal cyanide compounds (DMC catalysis) has been known since the 1960's as an alternative process for the preparation of polyether polyols. Improved highly active DMC catalysts such as those which are described in U.S. Patents 5,470,813 and US 6,696,383; EP-A 0 700 949; EP-A 0 743 093; EP-A 0 761 708; WO-A 97/40086; WO-A 98/16310 and WO-A 00/47649 have a high activity and make it possible to produce polyether polyols at very low catalyst concentrations (50 ppm or less). At these low catalyst levels, it is no longer necessary to separate off the DMC catalyst from the polyether polyol before using that polyether polyol to produce a polyurethane, e.g., a flexible polyurethane foam. As a result, the complexity of industrial polyether polyol production is decreased significantly. A disadvantage of the preparation of polycthcr polyols by DMC catalysis, however, is that polyether polyols having a 3-block structure can not be produced by DMC catalysis because in the EO cap, a heterogeneous, often phase-separated mixture of polyether polyol with a low content of oxyethylene units and highly ethoxylated polyether polyol and/or polyethylene oxide is formed.

Long-chain polyether polyols prepared by DMC catalysis with a high content of primary OH end groups and contents of oxyethylene units of > 70 wt.% are described in WO-A 00/64963. However, the process by which these polyether polyols are produced requires the use of oligomeric propoxylated starter compounds obtained beforehand from low molecular weight starter compounds (e.g., glycerol) by conventional KOH catalysis with subsequent separating off of the catalyst. The use of such starter compounds, however, increases the complexity of the process. Moreover, the polyether polyols prepared by this process are less suitable for use in producing flexible foams. (See Comparison Example 1 (polyol A1-1) and Comparison Example 15.)

EP-A 1 097 179 describes a process for the preparation of a polyol dispersion in which a reactor is first charged with a polyol precursor having a nominal functionality of from 2 to 8, 35 wt.% or less of oxyethylene units and an equivalent weight of 700 Da or more. A polyol initiator with an equivalent weight of less than 300 Da is then introduced into the reactor either before or during the oxyalkylation of the first polyol precursor with a mixture of alkylene oxides containing at least 50 wt.% of ethylene oxide in the presence of an oxyalkylation catalyst, which is preferably a DMC catalyst. The

oxyalkylation is continued until the second polyol has reached an equivalent weight of at least 500 Da. The dispersions produced in EP-A 1 097 179 are liquid-liquid dispersions of a) diblock polyethers composed of inner blocks having high contents of oxypropylene units and equivalent weights of at least 700 Da and outer blocks having high contents of oxyethylene units with either b1) mono-block polyethers having high contents of oxyethylene units or b2) diblock polyethers with the inner block of high oxypropylene unit content being significantly shorter than the corresponding block in component a). These dispersions are stable (no visible phase separation occurs) at room temperature for a period of at least 3 days. Total oxyethylene contents in the end product of about 65 % can be achieved by this process. These dispersion polyols can be employed for the production of hypersoft foams. However, the preparation process described in EP-A 1 097 179 is complicated, is not very flexible, requires the use of an oligomeric alkoxylated precursor which must be prepared beforehand from low molecular weight starter compounds (e.g., by conventional KOH catalysis with subsequent separating off of the catalyst), and yields a polyol mixture which includes a polyol having a high content of oxypropylene units and a polyol with a high content of oxyethylene units.

EP-A 879 259 discloses a process for the preparation of polyether polyols in which propylene oxide/ethylene oxide mixtures with only up to 20 wt.% of ethylene oxide (EO) are metered continuously together with the low molecular weight starter compound.

EP-A 912 625 discloses a process for the preparation of polyether polyols in which either exclusively propylene oxide or a propylene oxide/ethylene oxide mixture with an ethylene oxide content of up to 12 wt.% is metered continuously together with the low molecular weight starter compound.

## SUMMARY OF THE INVENTION

It is an object of the present invention to provide a simple process for the preparation of polyether polyols having a content of oxyethylene units of between 73 wt.% and 80 wt.%, which are suitable for the production of flexible polyurethane foams.

It is also an object of the present invention to provide polyether polyols useful for the production of flexible polyurethane foams having better mechanical properties than those of flexible polyurethane foams produced with 3-block polyethers prepared by means of conventional base catalysis.

It is a further object of the present invention to provide polyether polyols useful for the production of flexible polyurethane foams having low compression set (CS).

It is another object of the present invention to provide a simple and economical process for the production of polyether polyols having high oxyethylene group content by DMC catalysis.

These and further objects which will be apparent to those skilled in the art are accomplished by continuously metering a mixture of a low molecular weight starter compound and a mixture of alkylene oxides satisfying specified compositional requirements into a reactor containing a mixture of a DMC catalyst and a polyoxyalkylene polyol satisfying specified compositional requirements and allowing the reactor contents to react.

## DETAINED DESCRIPTION OF THE INVENTION

The subject-matter of the present invention is defined in claims 1-9 as attached. The present invention is directed to a process for the preparation of polyether polyols with an OH number of from 15 to 120 mg of KOH/g and to the polyether polyols produced by this process.

In the first step of the process of the present invention, a mixture of DMC catalyst and a poly(oxyalkylene) polyol are introduced into the reactor. The polyether chains in the poly(oxyalkylene polyol) preferably have a weight ratio of oxyethylene units to alkyloxyethylene units of from 73 to 80 oxyethylene units to from 20 to 27 alkyloxyethylene units, most preferably the same weight ratio of oxyethylene units to alkyloxycthylene units as the mixture of ethylene oxide and substituted alkylene oxide metered used in the second step of the process.

In the second step of the process of the present invention, at least one low molecular weight starter compound having a hydroxyl functionality of from 1.0 to 8.0 and a mixture which includes a) 73 to 80 parts by weight (based on the sum of the parts by weight of a+b) of ethylene oxide and b) 20 to 27 parts by weight (based on the sum of the parts by weight of a+b) of at least one substituted alkylene oxide are metered continuously into the mixture introduced into the reactor in the first step of the process of the present invention. The sum of the parts of a) + b) is equal to 100 parts by weight.

The substituted alkylene oxide included in the mixture introduced into the reactor in the second step of the process of the present invention is chosen from the group of compounds represented by Formula (I)

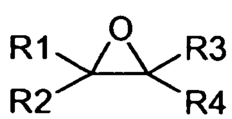

(I)

in which
R1, R2, R3 and R4 independently of each other represent hydrogen, a $C_1$-$C_{12}$-alkyl group and/or a phenyl group, provided that at least one of the radicals R1 to R4 is not hydrogen and that one or more methylene groups in the $C_1$-$C_{12}$-alkyl radical can also be replaced by a hetero atom such as an oxygen atom or a sulfur atom.

The hydroxyl functionality f(OH) is the number of hydroxyl groups per low molecular weight starter compound. In the case of a mixture of low molecular weight starter compounds ("starter mixture"), the calculated number-average functionality is stated as the mixed hydroxyl functionality $f_n$(OH) which is calculated by dividing the number of hydroxyl groups per weight unit of starter mixture by the number of moles of starter per weight unit of starter mixture. The polyether polyols produced by the process of the present invention have a mixed hydroxyl functionality of between 2.2 and 6.0, preferably between 2.4 and 5.0 and most preferably between 2.5 and 4.0.

In another preferred embodiment of the present invention, the second step of the process is carried out in a reactor or a reactor system in which at least one low molecular weight starter compound having a hydroxyl functionality of from 1.0 to 8.0, DMC catalyst and the mixture of a) and b) are metered in continuously, and the mixture resulting from step (ii) is removed continuously from the reactor or the reactor system at one or more suitable points.

It has now been found, surprisingly, that the polyether polyols produced by the process of the present invention are outstandingly suitable for the production of flexible polyurethane foams.

The present invention therefore also provides flexible polyurethane foams produced by reaction of polyisocyanates and the polyether polyols of the present invention.

Surprisingly, it has been found that a clear, homogeneous and low-viscosity polyether polyol with a narrow molecular weight distribution which can be processed to produce outstanding flexible polyurethane foams is obtained by the process of the present invention. These advantageous properties are also retained, surprisingly, if a poly(oxyalkylene) polyol with polyether chains having the same epoxide composition as the epoxide mixture metered into the reactor in the second step of the process of the present invention is also employed in the first step of the process of the present invention as the starting medium which contains the DMC catalyst. It is, therefore, particularly preferable that the polyether polyol product ("heel") be employed as the starting medium because no separate infrastructure (e.g. storage tank) is necessary for the starting medium. This is of great advantage for the profitability of the process.

Suitable polyisocyanates for the production of the flexible foams in accordance with the present invention include: aliphatic, cycloaliphatic, araliphatic, aromatic and heterocyclic polyisocyanates such as those described in Justus Liebigs Annalen der Chemie 562 (1949) 75. Examples of such polyisocyanates are those represented by the formula

$$Q(NCO)_n$$

in which in which

n represents an integer from 2 to 4, preferably 2, and

Q represents an aliphatic hydrocarbon radical having from 2 to 18, preferably from 6 to 10 C atoms; a cycloaliphatic hydrocarbon radical having from 4 to 15, preferably from 5 to 10 C atoms; an aromatic hydrocarbon radical having from 6 to 15, preferably from 6 to 13 C atoms; or an araliphatic hydrocarbon radical having from 8 to 15, preferably from 8 to 13 C atoms.

Polyisocyanates such as those described in DE-OS 2 832 253 are preferred. Those which are particularly preferred are those polyisocyanates which are readily available industrially, e.g., 2,4- and 2,6-toluene diisocyanate and any desired mixtures of these isomers ("TDI"); polyphenyl-polymethylene-polyisocyanates, such as those prepared by aniline-formaldehyde condensation and subsequent phosgenation ("crude MDI"); and polyisocyanates containing carbodiimide groups, urethane groups, allophanate groups, isocyanurate groups, urea groups or biuret groups ("modified polyisocyanates"), in particular those modified polyisocyanates which are derived from 2,4- and/or 2,6-toluene diisocyanate or from 4,4'- and/or 2,4'-diphenylmethane-diisocyanate.

The polyether polyols employed in the process of the present invention are produced by DMC-catalyzed polyaddition of epoxides on to one or more low molecular weight starter compounds.

DMC catalysts which are suitable for producing the polyether polyols of the present invention are known. (See, e.g., U.S. Patents 3,404109; 3,829,505; 3,941,849; and 5,158,922). Preferred catalysts are those improved highly active DMC catalysts described, for example, in U.S. Patents 5,470,813 and 6,696,383; EP-A 0 700 949; EP-A 0 743 093; EP-A 0 761 708; WO-A 97/40086; WO-A 98/16310; and WO-A 00/47649. These highly active catalysts make it possible to produce polyether polyols at very low catalyst concentrations (50 ppm or less). The highly active DMC catalysts described in EP-A 0 700 949, which, in addition to a double metal cyanide compound, such as zinc hexacyanocobaltate(III), and an organic complexing ligand, such as tert-butanol, also contain a polyether polyol with a number-average molecular weight of greater than 500 g/mol, are a typical example.

Low molecular weight starter compounds which may be employed in the process of the present invention are compounds having (number-average) molecular weights of from 18 to 1,000 g/mol and from 1 to 8 Zerewitinoff-active hydrogen atoms. Hydrogen bonded to N, O or S is called Zerewitinoff-active hydrogen (sometimes also only "active hydrogen") if it delivers methane by reaction with methylmagnesium iodide by a process discovered by Zerewitinoff. Typical examples of compounds with Zerewitinoff-active hydrogen are compounds which contain carboxyl, hydroxyl, amino, imino or thiol groups as functional groups. Starter compounds with hydroxyl groups are preferably employed in the process of the present invention. Examples of suitable starter compounds include: methanol, ethanol, propanol, butanol, ethylene glycol, diethylene glycol, triethylene glycol, 1,2-propylene glycol, dipropylene glycol, tripropylene glycol, 1,4-butanediol, 1,6-hexanediol, bisphenol A, trimethylolpropane, glycerol, castor oil, pentaerythritol, sorbitol, sucrose and water. Particularly preferred low molecular weight starter compounds are 1,2-propylene glycol and glycerol. The low molecular weight starter compounds can, in principle, be employed in the process of the present invention individually or as mixtures. Since the hydroxyl functionality $f_n$(OH) of the polyether polyol is determined by the functionality of the low molecular weight starter compounds or of the mixture of two or more low molecular weight starter compounds, low molecular weight starter compounds with a functionality of from 3 to 6, preferably from 3 to 5 and most preferably of 3 and 4 can be employed individually or as a mixture with the starter compounds. Low molecular weight starter compounds with a functionality of 1 or 2 or 7 or 8, preferably of 1 or 2 or 6 to 8, most preferably of 1 or 2 or 5 to 8, can be employed as a mixture with the above-mentioned low molecular weight starter compounds.

The OH number of the polyether polyols obtained by DMC catalysis in accordance with the process of the present invention is between 15 and 120 mg of KOH/g, preferably between 20 and 100 mg of KOH/g, and most preferably between 25 and 60 mg of KOH/g.

Preferably, the polyether polyols obtained by DMC catalysis contain only an epoxide mixed block obtained from at least 73 wt.% of ethylene oxide and at most 27 wt.% of one or more substituted alkylene oxides. Substituted alkylene oxides which are preferably employed are propylene oxide, 1,2-butylene oxide, 2,3-butylene oxide or styrene oxide. Propylene oxide is most preferably employed.

Within the epoxide mixed block, the ratio between ethylene oxide and substituted alkylene oxide can be kept constant over the entire length of the mixed block. However, it is also possible for the ratio to vary within the mixed block. For example, in some uses it is advantageous to increase the mixture ratio between ethylene oxide and the substituted alkylene oxide towards the chain end to obtain higher contents of primary hydroxyl end groups. However, the epoxide mixed block of the end product should advantageously contain in its entirety

a) from 73 to 80 parts by weight, preferably from 74 to 80 parts by weight, most preferably from 75 to 80 parts by weight, (in each case based on the sum of the parts by weight of a+b, with sum of the parts by weight of a) and b) equal to 100 parts by weight) of ethylene oxide and

b) from 20 to 27 parts by weight, preferably from 20 to 26 parts by weight, most preferably from 20 to 25 parts by weight (in each case based on the sum of the parts by weight of a+b with the sum of the parts of a) and b) equal to 100 parts by weight) of at least one substituted alkylene oxide.

Surprisingly, it has been found that products with oxyethylene group contents of greater than 80 parts by weight (per 100 parts by weight of a+b) in the polyether chains tend towards severe clouding during storage and macroscopic phase separation also occurs over a longer period of time. It is, therefore, a disadvantage if greater than 80 parts by weight per 100 parts by weight of a) plus b) of oxyethylene group units in the polyether chains are present.

The polyether polyols of the present invention with OH numbers of between 15 and 120 mg of KOH/g employed for production of flexible polyurethane foams are obtained by a DMC-catalyzed process in which low molecular weight starter compounds with a (mixed) hydroxyl functionality of from 2.2 to 6.0 and an epoxide mixture are continuously metered into a poly(oxyalkylene) polyol starting medium containing a DMC catalyst. The composition of the epoxide mixture of ethylene oxide and one or more substituted alkylene oxides is chosen so that the total composition of the polyether chains in the end product has at least 73 wt.% oxyethylene units and up to 27 wt.% of one (or more) further alkylene oxide(s), preferably no greater than 80 wt.% of oxyethylene units.

The polyether polyols of the present invention having OH numbers of between 15 and 120 mg of KOH/g employed for production of the flexible polyurethane foams are preferably obtained by a DMC-catalyzed process in which low molecular weight starter compounds with a (mixed) hydroxyl functionality of from 2.2 to 6.00 and an epoxide mixture composed of at least 73 wt.% of ethylene oxide and at most 27 wt.% of one or more substituted alkylene oxides are continuously metered into a poly(oxyalkylene) polyol starting medium with polyether chains having the same epoxide composition as the epoxide mixture containing a DMC catalyst. The poly(oxyalkylene) polyol starting medium containing the DMC catalyst is most preferably the end product of the present invention.

The process for the preparation of the polyether polyols of the present invention is preferably carried out by a completely continuous DMC-catalyzed process in which at least one low molecular weight starter compound with a hydroxyl functionality of from 1.0 to 8.0, the DMC catalyst and a mixture composed of

a) from 73 to 80 parts by weight, preferably from 74 to 80 parts by weight, most preferably from 75 to 80 parts by weight (per 100 parts by weight of a+b) of ethylene oxide and

b) from 20 to 27 parts by weight, preferably from 20 to 26 parts by weight, most preferably from 20 to 25 parts by weight (per 100 parts by weight of a+b) of at least one substituted alkylene oxide

are continuously metered into a reactor or a reactor system. The end product is continuously removed from the reactor or the reactor system at one (or more) suitable point(s).

Because of the general tendency of DMC-catalyzed polyether polyols with a high EO content (> 60 wt.%) towards phase separation and towards the formation of heterogeneous mixtures, it is very surprising that a completely continuous DMC-catalyzed process with continuous metering of an epoxide mixture composed of at least 73 wt.% of ethylene oxide and at most 27 wt.% of one or more substituted alkylene oxides (e.g., propylene oxide) produces a clear, homogeneous and low-viscosity polyether polyol with a narrow molecular weight distribution which can be processed into flexible polyurethane foams in an outstanding manner.

The DMC-catalyzed alkoxylation is in general carried out at temperatures of from 50 to 200 °C, preferably in the range of from 80 to 180 °C, most preferably at temperatures of from 100 to 160 °C.

The concentration of the DMC catalyst employed is generally from 5 to 100 ppm, preferably from 10 to 75 ppm and most preferably from 15 to 50 ppm, based on the amount of polyether polyol to be prepared. Because of the very low catalyst concentration, the polyether polyols can be employed for the production of flexible polyurethane foams without removal of the catalyst, without the foam product qualities being adversely influenced.

In addition to the polyether polyols just described which are prepared by DMC catalysis, other compounds containing hydroxyl groups (polyols) can be included in the polyol formulation for the production of the flexible polyurethane foams according to the invention. These polyols, which are known per se, are described in detail, e.g., in Gum, Riese & Ulrich (eds.): "Reaction Polymers", Hanser Verlag, Munich 1992, p. 66-96 and G. Oertel (ed.): "Kunststoffhandbuch, volume 7, Polyurethane", Hanser Verlag, Munich 1993, p. 57-75. Examples of suitable polyols may be found in the literature references previously mentioned and in U.S, Patents 3 652 639; 4 421 872; and 4 310 632.

Polyols which are preferably employed to produce polyurethane foams in addition to the polyether polyols of the present invention are known polyether polyols (in particular poly(oxyalkylene) polyols) and polyester polyols.

The additional polyether polyols are prepared by known methods, preferably by base-catalyzed or DMC-catalyzed polyaddition of epoxides on to polyfunctional starter compounds containing active hydrogen atoms, such as alcohols or amines. Examples of suitable starter compounds include: ethylene glycol, diethylene glycol, 1,2-propylene glycol, 1,4-butanediol, hexamethylene glycol, bisphenol A, trimethylolpropane, glycerol, pentaerythritol, sorbitol, sucrose, degraded starch, water, methylamine, ethylamine, propylamine, butylamine, aniline, benzylamine, o- and p-toluidine, $\alpha,\beta$-naphthylamine, ammonia, ethylenediamine, propylenediamine, 1,4-butylenediamine, 1,2-, 1,3-, 1,4-, 1,5-and/or 1,6-hexamethylene-diamine, o-, m- and p-phenylenediamine, 2,4- and 2,6-toluenediamine, 2,2'-, 2,4-and 4,4'-diaminodiphenylmethane and diethylenediamine. Preferred epoxides are ethylene oxide, propylene oxide, butylene oxide and mixtures thereof. The buildup of the polyether chains by alkoxylation can be carried out only with one monomeric epoxide, but can also be carried out randomly or also blockwise with two or three different monomeric epoxides.

Processes for the preparation of such polyether polyols are described in "Kunststoffhandbuch, volume 7, Polyurethane", in "Reaction Polymers" and in U.S. Patents 1 922 451; 2 674 619; 1 922 459; 3 190 927; and 3 346 557.

Methods for the preparation of polyester polyols are likewise well-known and are described, e.g., in "Kunststoffhandbuch, volume 7, Polyurethane" and "Reaction Polymers". The polyester polyols are, in general, prepared by polycondensation of polyfunctional carboxylic acids or derivatives thereof (e.g., acid chlorides or anhydrides) with polyfunctional hydroxyl compounds.

Polyfunctional carboxylic acids which maybe used include: adipic acid, phthalic acid, isophthalic acid, terephthalic acid, oxalic acid, succinic acid, glutaric acid, azelaic acid, sebacic acid, fumaric acid or maleic acid.

Polyfunctional hydroxyl compounds which may be used include: ethylene glycol, diethylene glycol, triethylene glycol, 1,2-propylene glycol, dipropylene glycol, 1,3-butanediol, 1,4-butanediol, 1,6-hexanediol, 1,12-dodecanediol, neopentyl glycol, trimethylolpropane, triethylolpropanc or glycerol.

The preparation of the polyester polyols can also be carried out by ring-opening polymerization of lactones (e.g., caprolactone) with diols and/or triols as starters.

In addition, a crosslinker component can be used to produce flexible polyurethane foams in accordance with the present invention. Examples of suitable crosslinking agents include: diethanolamine, triethanolamine, glycerol, trimethylolpropane (TMP), adducts of such crosslinker compounds with ethylene oxide and/or propylene oxide with an OH number of < 1,000 or also glycols with a number-average molecular weight of $\leq$ 1,000. Triethanolamine, glycerol, TMP or low molecular weight EO and/or PO adducts of these compounds are particularly preferred.

Known auxiliary substances, additives and/or flameproofing agents can optionally be used in the production of polyurethane foams in accordance with the present invention. In this context, auxiliary substances are understood as meaning, in particular, any of the known catalysts and stabilizers. Melamine, e.g., can be used as a flameproofing agent.

Catalysts which may optionally be included in the polyurethane-forming reaction mixture are known. Examples of suitable catalysts include: tertiary amines such as triethylamine, tributylamine, N-methylmorpholine, N-ethyl-morpholine, N,N,N',N'-tetramethylethylenediamine, pentamethyldiethylenetriamine and higher homologues (DE-A 26 24 527 and DE-A 26 24 528), 1,4-diaza-bicyclo-[2,2,2]octane, N-methyl-N'-dimethylaminoethyl-piperazine, bis(dimethylaminoalkyl)-piperazines (DE-A 26 36 787), N,N-dimethylbenzyl-amine, N,N-dimethyl-cyclohexylamine, N,N-diethylbenzylamine, bis(N,N-diethylaminoethyl) adipate, N,N,N',N'-tetramethyl-1,3-butanediamine, N,N-dimethyl-β-phenyl-ethylamine, 1,2-dimethylimidazole, 2-methylimidazole, monocyclic and bicyclic amidines (DE-A 17 20 633), bis(dialkylamino)alkyl ethers (U.S. Patent 3 330 782, DE-A 10 30 558, DE-A 18 04 361 and DE-A 26 18 280) and tertiary amines containing amide groups (preferably formamide groups) according to DE-A 25 23 633 and DE-A 27 32 292. Other suitable catalysts include any of the known Mannich bases from secondary amines, e.g., dimethylamine, and aldehydes, preferably formaldehyde, or ketones, such as acetone, methyl ethyl ketone or cyclohexanone, and phenols, such as phenol, nonylphenol or bisphenols. Tertiary amines which contain hydrogen atoms that are active towards isocyanate groups and which can be employed as the catalyst include: triethanolamine, triisopropanolamine, N-methyl-diethanolamine, N-ethyl-diethanolamine, N,N-dimethylethanolamine, reaction products thereof with alkylene oxides, such as propylene oxide and/or ethylene oxide, and secondary-tertiary amines according to DE-A 27 32 292. Other suitable catalysts include sila-amines with carbon-silicon bonds, such as those described in DE-A 12 29 290 (e.g., 2,2,4-trimethyl-2-silamorpholine and 1,3-diethyl-aminomethyltetramethyldisiloxane). Other suitable catalysts also include: nitrogen-containing bases, such as tetraalkylammonium hydroxides; alkali metal hydroxides, such as sodium hydroxide; alkali metal phenolates, such as sodium phenolate; or alkali metal alcoholates, such as sodium methylate. Hexahydrotriazines can also be employed as catalysts (DE-A 17 69 043). The reaction between NCO groups and Zerewitinoff-active hydrogen atoms is also greatly accelerated by lactams and azalactams, where an associate between the lactam and the compound with acidic hydrogen is formed initially. Such associates and their catalytic action are described in DE-A 20 62 286, DE-A 20 62 289, DE-A 21 17 576, DE-A 21 29 198, DE-A 23 30 175 and DE-A 23 30 211. Organometallic compounds, in particular organotin compounds, can also be used as catalysts. Suitable organotin compounds are, in addition to sulfur-containing compounds such as di-n-octyl-tin mercaptide (DE-A 17 69 367 and U.S. Patent 3 645 927); preferably tin(II) salts of carboxylic acids such as tin(II) acetate, tin(II) octoate, tin(II) ethylhexanoate and tin(II) laurate; and tin(IV) compounds such as dibutyltin oxide, dibutyltin dichloride, dibutyltin diacetate, dibutyltin dilaurate, dibutyltin maleate or dioctyltin diacetate. Any of the above-mentioned catalysts may, of course, be employed in mixtures. In this context, combinations of organometallic compounds and amidines, aminopyridines or hydrazinopyridines are of particular interest (DE-A 24 34 185, DE-A 26 01 082 and DE-A 26 03 834). So-called polymeric catalysts such as those described in DE-A 42 18 840 can also be employed as catalysts. These catalysts are reaction products, present in the alkali metal salt form, of alcohols which are trifunctional or more than trifunctional and have (number-average) molecular weights of from 92 to 1,000 with cyclic carboxylic acid anhydrides. The reaction products have (as a statistical average) at least 2, preferably from 2 to 5 hydroxyl groups and at least 0.5, preferably 1.0 to 4 carboxylate groups, the counter-ions to the carboxylate groups being alkali metal cations. The "reaction products" of the starting components can also be, as can be seen from the content of carboxylate groups, mixtures of true reaction products with excess amounts of alcohols. Suitable polyfunctional alcohols for preparation of the reaction products are, for example, glycerol, trimethylolpropane, sorbitol, pentaerythritol, mixtures of such polyfunctional alcohols, alkoxylation products of such polyfunctional alcohols or of mixtures of such polyfunctional alcohols having (number-average) molecular weights of from 92 to 1,000, characterized in that propylene oxide and/or ethylene oxide in any desired sequence or in a mixture, but preferably exclusively propylene oxide, is/are employed in the alkoxylation. Suitable cyclic carboxylic acid anhydrides for the preparation of the reaction products are, for example, maleic anhydride, phthalic anhydride, hexahydrophthalic anhydride, succinic anhydride, pyromellitic anhydride or any desired mixtures of such anhydrides. Maleic anhydride is particularly preferably employed. Other representatives of catalysts to be used and details of the mode of action of the catalysts are described in Vieweg and Höchtlen (eds.): Kunststoff-Handbuch, volume VII, Carl-Hanser-Verlag, Munich 1966, p. 96 - 102.

The catalysts are generally employed in amounts of from about 0.001 to 10 wt.%, based on the total weight of compounds with at least two hydrogen atoms which are reactive towards isocyanates.

Other additives which may optionally be employed are surface-active additives such as emulsifiers and foam stabilizers. Suitable emulsifiers include the sodium salts of castor oil sulfonates or salts of fatty acids with amines such as diethylamine oleate or diethanolamine stearate. Alkali metal or ammonium salts of sulfonic acids such as the salts of dodecylbenzenesulfonic acid or dinaphthy-lmethanedisulfonic acid, or of fatty acids, such as ricinoleic acid, or of polymeric fatty acids can also be co-used as surface-active additives.

Foam stabilizers which may be employed include polyether-siloxanes, specifically those which are water-soluble. These compounds are in general built up so that a copolymer of ethylene oxide and propylene oxide is bonded to a polydimethylsiloxane radical. Such foam stabilizers are described, e.g.. in U.S. Patents 2 834 748; 2 917 480; and 3 629 308. Polysiloxane/polyoxyalkylene copolymers branched via allophanate groups, according to DE-A 25 58 523, are often of particular interest.

Other possible additives include: reaction retardants, e.g., acidic substances such as hydrochloric acid or

organic acid halides; known cell regulators such as paraffins or fatty alcohols or dimethylpolysiloxanes; known pigments or dyestuffs; and flameproofing agents, e.g., trichloroethyl phosphate, tricresyl phosphate or ammonium phosphate and ammonium polyphosphate; and stabilizers against the influences of ageing and weathering; plasticizers; fungistatically and bacteriostatically acting substances; and fillers such as barium sulfate, diatomaceous earth, carbon black or precipitated chalk.

Further examples of surface-active additives and foam stabilizers optionally to be co-used in the production of polyurethanes in accordance with the present invention as well as cell regulators, reaction retardants, stabilizers, flame-retardant substances, plasticizers, dyestuffs and fillers, and fungistatically and bacteriostatically active substances and details of the mode of use and action of these additives are described in Vieweg and Höchtlen (eds.): Kunststoff-Handbuch, volume VII, Carl-Hanser-Verlag, Munich 1966, p. 103 - 113.

Possible blowing agent components which may optionally be used to produce polyurethanes in accordance with the present invention include any of the known blowing agents. Suitable organic blowing agents include: acetone; ethyl acetate; halogen-substituted alkanes, such as methylene chloride, chloroform, ethylidene chloride, vinylidene chloride, monofluorotrichloromethane, chlorodifluoromethane and dichlorodifluoromethane; butane; isobutane; n-pentane; cyclopentane; hexane; heptane; or diethyl ether. Suitable inorganic blowing agents include air, $CO_2$ or $N_2O$. A blowing action can also be achieved by addition of compounds which decompose at temperatures above room temperature with splitting off of gases, for example, nitrogen (e.g., azo compounds, such as azodicarboxamide or azoisobutyric acid nitrile). Hydrogen-containing fluoroalkanes (HFCs) and lower alkanes, such as butane, pentane, isopentane, cyclopentane, hexane and iso-hexane, optionally in a mixture with one another and/or with the addition of water, are particularly preferred blowing agents. Further examples of blowing agents and details of the use of blowing agents are described in Vieweg and Höchtlen (eds.): Kunststoff-Handbuch, volume VII, Carl-Hanser-Verlag, Munich 1966, p. 108 et seq., p. 453 et seq. and p. 507 et seq. It is most preferred, however, that water or $CO_2$ is the sole blowing agent.

In the process for producing polyurethanes in accordance with the present invention, the reaction components may be reacted by the known one-stage process, the prepolymer process or the semi-prepolymer process. Mechanical equipment such as is described in U.S. Patent 2 764 565 is preferably used in the polyurethane-forming process. Details of other processing equipment which is also suitable is described in Vieweg and Höchtlen (eds.): Kunststoff-Handbuch, volume VII, Carl-Hanser-Verlag, Munich 1966, p. 121 to 205.

In producing foam in accordance with the present invention, foaming can also be carried out in closed molds. In this context, the reaction mixture is introduced into a mold. Suitable molds may be made of metal, e.g., aluminum, or plastic, e.g., epoxy resin. The foamable reaction mixture expands in the mold and forms the shaped article. The production of molded foams can be carried out in a manner such that the foam will have a cell structure on its surface. However, it can also be carried out in a manner such that the foam will have a compact skin and a cellular core. The foamable reaction mixture may be introduced into the mold in an amount such that the foam formed just fills the mold. However, it is possible to introduce more foamable reaction mixture into the mold than is necessary to fill the inside of the mold with foam. In the latter case, the production is carried out with so-called "overcharging", a procedure described, e.g., in U.S. Patents 3 178 490 and 3 182 104.

Known "External release agents" such as silicone oils, are often co-used for the production of molded foams. However, so-called "internal release agents" can also be used, optionally in a mixture with external release agents, as disclosed, for example, in DE-OS 21 21 670 and DE-OS 23 07 589.

Foams can, of course, also be produced by slabstock foaming or by the double conveyor belt process. (See "Kunststoffhandbuch", volume VII, Carl Hanser Verlag, Munich Vienna, 3rd edition 1993, p. 148.)

The foams can be produced by various processes for slabstock foam production or in molds. In the production of slabstock foams, in a preferred embodiment of the invention, in addition to the polyether polyols of the present invention, those which have a propylene oxide (PO) content of at least 50 wt.%, preferably at least 60 wt.%, are used. Polyether polyols with a content of primary OH groups of more than 40 mol%, in particular more than 50 mol%, have proven to be particularly suitable for the production of cold-cure molded foams.

## EXAMPLES

### Methods:

The OH numbers for the polyols produced in these Examples were determined as specified in DIN 53240.

The viscosities were determined by means of a rotary viscometer (Physica MCR 51, manufacturer: Anton Paar) as specified in DIN 53018.

The molar mass distribution was determined by means of size exclusion chromatography (SEC). The apparatus Agilent 1100 Series from Agilent was used.

The polydispersity PD for the molecular weight distribution $M_w/M_n$, wherein $M_w$ represents the weight-average molecular weight and $M_n$ represents the number-average molecular weight, is stated.

Further details:

- Column combination: 1 pre-column PSS, 5 μl, 8x50mm; 2 PSS SVD, 5 μl, 100 A°, 8x300mm; 2 PSS SVD, 5 μl, 1000 A°, 8x300mm, PSS is the manufacturer of the columns (Polymer Standard Solutions, Mainz, Germany)
- Evaluation software: WIN GPC from PSS
- Solvent: THF (Merck LiChrosolv)
- Flow rate: 1 ml / min
- Detector type: RI detector (refractive index), Shodex RI 74
- Calibration standards used: calibrating standard from PSS based on polystyrene.

**Examples of preparation of polyols to be employed according to the invention and comparison polyols by discontinuous process variants**

Starting Materials:

Catalyst for the alkylene oxide addition (DMC catalyst):

Double metal cyanide catalyst containing zinc hexacyanocobaltate, tert-butanol and polypropylene glycol with a number-average molecular weight of 1,000 g/mol, prepared in accordance with U.S. Patent 6,696,383, Example 10.

IRGANOX® 1076:

Octadecyl 3-(3,5-di-tert-butyl-4-hydroxyphenyl)propionate, Ciba SC, Lampertheim

**Polyol A:**

Polyol A is a trifunctional polyol with an OH number of 400 mg of KOH / g. Polyol A was obtained by KOH-catalyzed addition of propylene oxide on to glycerol, work-up by neutralization with sulfuric acid and removal of the salts formed by filtration. After filtration, 500 ppm of IRGANOX® 1076 and 100 ppm of phosphoric acid were added to the polyol.

**Polyol B:**

555.5 g of Polyol A and 0.245 g of DMC catalyst were introduced into a 101 laboratory autoclave under a nitrogen atmosphere. The autoclave was closed and its contents were stripped at 130 °C over a period of 0.5 h and at a stirrer speed of 450 rpm in vacuum while passing 50 ml of nitrogen through per minute. A mixture of 1,332.7 g of propylene oxide and 4,122.0 g of ethylene oxide was then metered into the autoclave over a period of 6.05 h. The metering of alkylene oxide was started under a pressure of 0.13 bar. The start of the polymerization reaction manifested itself 9 minutes after the start of the metering by an accelerated drop in pressure, starting from a maximum pressure reached of 2.1 bar. After a post-reaction time of 0.42 h, the mixture was heated thoroughly at 130 °C in vacuum for 0.5 h and thereafter cooled to 80 °C, and 3.06 g of IRGANOX® 1076 were added. The OH number was 37.1 mg of KOH / g and the viscosity at 25 °C was 1,189 mPas. The ratio of ethylene oxide to propylene oxide in the end product was 70/30.

**Examples 1: (Comparison): Polyol A1-1**

582.9 g of Polyol A and 0.282 g of DMC catalyst were introduced into a 101 laboratory autoclave under a nitrogen atmosphere. The autoclave was closed and its contents were stripped at 130 °C over a period of time of 0.5 h and at a stirrer speed of 450 rpm in vacuum while passing 50 ml of nitrogen through per minute. A mixture of 1,389.2 g of propylene oxide and 4,329.2 g of ethylene oxide was then metered into the autoclave over a period of time of 6.13 h. The metering of alkylene oxide was started under a pressure of 0.14 bar. The start of the polymerization reaction manifested itself 10 minutes after the start of the metering by an accelerated drop in pressure, starting from a maximum pressure reached of 1.4 bar. After a post-reaction time of 0.42 h, the mixture was heated thoroughly at 130 °C in vacuum for 0.5 h and thereafter cooled to 80 °C, and 3.246 g of IRGANOX® 1076 were added. The OH number was 36.6 mg of KOH / g and the viscosity at 25 °C was 1,203 mPas. The ratio of ethylene oxide to propylene oxide in the end product was 70 / 30.

**Example 2: Polyol A1-4a**

750.2 g of Polyol B and 0.164 g of DMC catalyst were introduced into a 101 laboratory autoclave under a

nitrogen atmosphere. The autoclave was closed and its contents were stripped at 130 °C over a period of time of 0.5 h and at a stirrer speed of 450 rpm in vacuum while passing 50 ml of nitrogen through per minute. A mixture of 8.5 g of propylene oxide and 26.5 g of ethylene oxide was then metered into the autoclave. The DMC catalyst was thereby activated. The metering of 106.5 g of glycerol (containing 75 ppm of phosphoric acid) was added to the continuing metering of the remainder of the epoxide mixture, composed of 3,862.9 g of ethylene oxide and 1,241.3 g of propylene oxide. The metering of the epoxide mixture was carried out in the course of 6.0 h. The mitering of glycerol ended before metering of the epoxide mixture, so that at the end of the metering phase a further 1,300 g of epoxide mixture were metered in without metering of glycerol. After a post-reaction time of 0.33 h, the mixture was heated thoroughly at 130 °C in vacuum for 0.5 h and thereafter cooled to 80 °C, and 3.017 g of IRGANOX® 1076 were added. The OH number was 36.3 mg of KOH / g and the viscosity at 25 °C was 1,542 mPas. The ratio of ethylene oxide to propylene oxide in the end product was 75 / 25.

**Example 3: Polyol A1-4b**

750.5 g of Polyol A1-4a and 0.164 g of DMC catalyst were introduced into a 101 laboratory autoclave under a nitrogen atmosphere. The autoclave was closed and its contents were stripped at 130 °C over a period of 0.5 h and at a stirrer speed of 450 rpm in vacuum while passing 50 ml of nitrogen through per minute. A mixture of 8.5 g of propylene oxide and 26.5 g of ethylene oxide was then metered into the autoclave. The DMC catalyst was thereby activated. The metering of 106.6 g of glycerol (containing 75 ppm of phosphoric acid) was added to the continuing metering of the remainder of the epoxide mixture, composed of 3,920.7 g of ethylene oxide and 1,258.9 g of propylene oxide. The metering of the epoxide mixture was carried out in the course of 5.98 h. The metering of glycerol ended before the metering of the epoxide mixture, so that at the end of the metering phase, a further 1,300 g of epoxide mixture were metered in without metering of glycerol. After a post-reaction time of 0.47 h, the mixture was heated thoroughly at 130 °C in vacuum for 0.5 h and thereafter cooled to 80 °C, and 3.013 g of IRGANOX® 1076 were added. The OH number was 36.6 mg of KOH / g and the viscosity at 25 °C was 1,542 mPas. The ratio of ethylene oxide to propylene oxide in the end product was 75.6 / 24.4.

**Example 4: (according to the invention): Polyol A1-4c**

750.1 g of Polyol A1-4b and 0.162 g of DMC catalyst were introduced into a 101 laboratory autoclave under a nitrogen atmosphere. The autoclave was closed and its contents were stripped at 130 °C over a period of 0.5 h and at a stirrer speed of 450 rpm in vacuum while passing 50 ml of nitrogen through per minute. A mixture of 8.5 g of propylene oxide and 26.5 g of ethylene oxide was then metered into the autoclave. The DMC catalyst was thereby activated. The metering of 107.0 g of glycerol (containing 75 ppm of phosphoric acid) was added to the continuing metering of the remainder of the epoxide mixture, composed of 3,936.4 g of ethylene oxide and 1,265.6 g of propylene oxide. The metering of the epoxide mixture was carried out in the course of 6.03 h. The metering of glycerol ended before the metering of the epoxide mixture, so that at the end of the metering phase a further 1,300 g of epoxide mixture were metered in without metering of glycerol. After a post-reaction time of 0.33 h, the mixture was heated thoroughly at 130 °C in vacuum for 0.5 h and thereafter cooled to 80 °C, and 3.029 g of IRGANOX® 1076 were added. The OH number was 36.6 mg of KOH / g and the viscosity at 25 °C was 1,541 mPas. The ratio of ethylene oxide to propylene oxide in the end product was 75.7 / 24.3.

**Examples 5: (Comparison): Polyol A1-2a**

750.0 g of Polyol A1-4b (from Example 3) and 0.163 g of DMC catalyst were introduced into a 10 I laboratory autoclave under a nitrogen atmosphere. The autoclave was closed and its contents were stripped at 130 °C over a period of 0.5 h and at a stirrer speed of 450 rpm in vacuum while passing 50 ml of nitrogen through per minute. A mixture of 10.5 g of propylene oxide and 24.5 g of ethylene oxide was then metered into the autoclave. The DMC catalyst was thereby activated. The metering of 106.4 g of glycerol (containing 75 ppm of phosphoric acid) was added to the continuing metering of the remainder of the epoxide mixture, composed of 3,632.6 g of ethylene oxide and 1,556.8 g of propylene oxide. The metering of the epoxide mixture was carried out in the course of 6.05 h. The metering of glycerol ended before the metering of the epoxide mixture, so that at the end of the metering phase a further 1,300 g of epoxide mixture were metered in without metering of glycerol. After a post-reaction time of 0.5 h, the mixture was heated thoroughly at 130 °C in vacuum for 0.5 h and thereafter cooled to 80 °C, and 3.014 g of IRGANOX® 1076 were added. The OH number was 36.5 mg of KOH / g and the viscosity at 25 °C was 1,463 mPas. The ratio of ethylene oxide to propylene oxide in the end product was 70.7 / 29.3.

**Examples 6: (comparison): Polyol A1-2b**

751.0 g of the polyol from Example 5 and 0.163 g of DMC catalyst were introduced into a 101 laboratory autoclave under a nitrogen atmosphere. The autoclave was closed and its contents were stripped at 130 °C over a period of time of 0.5 h and at a stirrer speed of 450 rpm in vacuum while passing 50 ml of nitrogen through per minute. A mixture of 10.5 g of propylene oxide and 24.5 g of ethylene oxide was then metered into the autoclave. The DMC catalyst was thereby activated. The metering of 106.4 g of glycerol (containing 75 ppm of phosphoric acid) was added to the continuing metering of the remainder of the epoxide mixture, composed of 3,594.0 g of ethylene oxide and 1,540.3 g of propylene oxide. The metering of the epoxide mixture was carried out in the course of 6.07 h. The metering of glycerol ended before the metering of the epoxide mixture, so that at the end of the metering phase a further 1,300 g of epoxide mixture were metered in without metering of glycerol. After a post-reaction time of 0.5 h, the mixture was heated thoroughly at 130 °C in vacuum for 0.5 h and thereafter cooled to 80 °C, and 3.037 g of IRGANOX® 1076 were added. The OH number was 36.7 mg of KOH / g and the viscosity at 25 °C was 1,446 mPas. The ratio of ethylene oxide to propylene oxide in the end product was 70.1/29.9.

**(Examples 7 - 14: (according to the invention): Preparation of the polyether polyols by the continuous process**

Polyether polyols with a calculated OH number = 37 mg of KOH/g and an ethylene oxide content of at least 73 wt.% were prepared by DMC catalysis (30 ppm, based on the final product mass) in a continuously operated 2 liter high-grade steel reactor with a 1 liter spiral tube reactor downstream. The following product compositions and process parameters were chosen in this context:

- Starter: glycerol (f(OH) = 3.0) or glycerol/propylene glycol mixture (weight ratio 85/15, $f_n$(OH) = 2.82)
- The DMC catalyst is dispersed in the glycerol, propylene glycol, polyether or mixtures of these components and continuously fed into the reactor with the epoxides. The catalyst slurry can be continuously stirred in the feed vessel or the catalyst slurry feed line can be continuously re-circulated to minimize catalyst settling.
- Epoxides: EO/PO mixture in the weight ratio 75/25 or 77.5 / 22.5
- Residence time (RT): 2 hours or 3 hours
- Reaction temperature: 130 °C or 155°C

The starter compounds or a mixture of two or more starter compounds are called the starter. In each case, the calculated functionality, based on the number of hydroxyl groups of the starter compound, is stated as f(OH). In the case of a mixture of starter compounds, the calculated number-average functionality $f_n$(OH), based on the number of hydroxyl groups of the starter compounds present in the mixture, is stated.

All of the polyether polyols prepared by the continuous process were characterized by determination of the OH number, viscosity and polydispersity PD (molecular weight distribution $M_w/M_n$)

The product compositions, process parameters and analytical data are reported in Table 1.

Table 1:

| Example | f(OH) or $f_n$(OH) | EO/PO (weight ratio) | Temp. [°C] | RT [h] | OH number [mg KOH/g] | Viscosity (25 °C) [mPas] | PD [Mw/Mn] |
|---|---|---|---|---|---|---|---|
| **7** | 2.82 | 75/25 | 130 | 2 | 37.1 | 1508 | 1.68 |
| **8** | 2.82 | 75/25 | 130 | 3 | 36.9 | 1544 | 1.64 |
| **9** | 2.82 | 75/25 | 155 | 2 | 36.1 | 1619 | 1.46 |
| **10** | 2.82 | 77.5/22.5 | 130 | 2 | 37.2 | 1515 | 1.55 |
| **11** | 2.82 | 77.5/22.5 | 155 | 2 | 36.4 | 1690 | 1.54 |
| **12** | 3.0 | 75/25 | 130 | 2 | 37.5 | 1559 | 1.48 |
| **13** | 3.0 | 75/25 | 155 | 2 | 37.9 | 1790 | 1.78 |
| **14** | 3.0 | 77.5/22.5 | 130 | 2 | 36.7 | 1593 | 1.74 |
| RT: residence time<br>PD: polydispersity | | | | | | | |

**Examples 15-18: Production of the flexible polyurethane foams**

The starting components were processed in a one-stage slabstock foaming process under conventional processing conditions to produce polyurethane foams. Table 2 reports the isocyanate index. (The amount of component B employed in relation to component A is determined from this index.) The isocyanate index indicates the percentage ratio of the amount of isocyanate actually employed to the stoichiometric, i.e. calculated, amount of isocyanate groups (NCO).

$$\text{Isocyanate index} = [(\text{amount of isocyanate employed}) : (\text{calculated isocyanate amount})] \bullet 100 \qquad (I)$$

The bulk density was determined in accordance with DIN EN ISO 845.
The compressive strength (CLD 40 %) was determined in accordance with DIN EN ISO 3386-1-98 at a deformation of 40 %, 4th cycle.
The tensile strength and the elongation at break were determined in accordance with DIN EN ISO 1798.
The compression set (CS 90 %) was determined in accordance with DIN EN ISO 1856-2000 at 90 % deformation.

Component A1:

A1-1 Polyol from Example 1 (comparative)

A1-2b Polyol from Example 6 (comparative)

A1-3 Trifunctional polyether polyol (comparative) with an OH number of 37 mg of KOH / g. Polyether polyol A1-3 was prepared by KOH-catalyzed addition of alkylene oxides, work-up by neutralization with sulfuric acid and removal of the salts formed by filtration. Polyether polyol A1-3 was produced from glycerol as the starter compound and lengthened with propylene oxide and ethylene oxide in a weight ratio of 27 / 73.

A1-4c Polyol from Example 4 (according to the invention)

A1-5 Polyether polyol with an OH number of 48 mg of KOH / g. Polyether polyol A1-5 was prepared by a completely continuous DMC-catalyzed alkylene oxide addition process. Polyether polyol A1-5 was prepared from a mixture of glycerol and propylene glycol in the weight ratio 83.4 / 16.5 as starter compounds and then lengthened with a mixture of propylene oxide and ethylene oxide in a weight ratio of 89.2 / 10.8.

Component A2: Water

Component A3:

A3-1 Bis(dimethylamino)diethyl ether (70 %) in dipropylene glycol (30 %) (Dabco® BL-11, Air Products, Hamburg, Germany).

A3-2 Tin(II) salt of 2-ethylhexanoic acid (Addocat® SO, Rheinchemie, Mannheim, Germany).

A3-3 1,4-Diazabicyclo[2.2.2]octane (33 wt.%) in dipropylene glycol (67 wt.%) (Dabco® 33 LV, Air Products, Hamburg, Germany).

A3-4 Polyether-siloxane-based foam stabilizer Tegostab® BF 2370 (Evonik Goldschmidt GmbH, Germany).

Component B:

Mixture of 2,4- and 2,6-TDI in the weight ratio 80 : 20 and with an NCO content of 48 wt.%.

Table 2: Flexible polyurethane foams, recipes and properties (Comparative Examples 15 - 17, Example 18)

| | | **15*** | **16*** | **17*** | **18** |
|---|---|---|---|---|---|
| A1-1 | | 75 | - | - | - |
| A1-2b | | - | 75 | - | - |
| A1-3 | | - | - | 75 | - |
| A1-4c | | - | - | - | 75 |
| A1-5 | | 25 | 25 | 25 | 25 |
| A2 | | 4.5 | 4.5 | 4.5 | 4.5 |
| A3-1 | | 0.10 | 0.10 | 0.10 | 0.10 |
| A3-2 | | 0.05 | 0.05 | 0.05 | 0.05 |
| A3-3 | | 0.1 | 0.1 | 0.1 | 0.1 |
| A3-4 | | 1.2 | 1.2 | 1.2 | 1.2 |
| | | | | | |
| B | | 47.7 | 47.7 | 47.7 | 47.7 |
| NCO Index | | 96 | 96 | 96 | 96 |
| Observation | | collapse | collapse | fine cell structure | fine cell structure |
| Bulk density | [kg/m$^3$] | - | - | 22.7 | 22.2 |
| Tensile strength | [kPa] | - | - | 86 | 80 |
| Elongation at break | [%] | - | - | 326 | 298 |
| Compressive strength | [kPa] | - | - | 1.2 | 1.3 |
| CS90% | [%] | - | - | 46.7 | 12.5 |
| * Comparative Example | | | | | |

No physical properties could be determined for Comparative Examples 15 and 16 because of the instability which occurred during production of the polyurethane foam.

The results listed in Table 2 show that only the foam produced in accordance with the present invention described in Example 18 had good long-term use properties, which can be seen from the low compression set.

## Claims

**1.** A process for the production of a polyether polyol, which is suitable for the production of flexible polyurethane foams, with an OH number of from 15 to 120 mg of KOH/g comprising:

(a) introducing into a reactor or a reactor system a mixture of DMC catalyst and a poly(oxyalkylene) polyol,
(b) continuously metering into the reactor or a reactor system containing the mixture introduced in (a)

(i) at least one low molecular weight starter compound with a hydroxyl functionality of from 1.0 to 8.0 and a number-average molecular weight of from 18 to 1,000 g/mol,
and
(ii) a mixture comprising

(1) from 73 to 80 parts by weight of ethylene oxide per 100 parts by weight of (b)(ii)(1) plus (b)(ii)(2), and
(2) from 27 to 20 parts by weight of at least one substituted alkylene oxide per 100 parts by weight of (b)(ii)(1) plus (b)(ii)(2),

the substituted alkylene oxide being a compound corresponding to Formula (I)

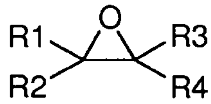

(I)

in which
R1, R2, R3 and R4 independently of each other represent hydrogen, a $C_1$-$C_{12}$-alkyl group and/or a phenyl group, provided that:

(I) at least one of the radicals R1 to R4 does not represent hydrogen
and
(II) one or more methylene groups in any $C_1$-$C_{12}$-alkyl radical may be replaced by an oxygen atom or a sulfur atom.

**2.** The process of Claim 1 in which oxyethylene units and oxyalkylene units present in the poly(oxyalkylene) polyol introduced in (a) are present in amounts of from 73 to 80 parts by weight of oxyethylene units and from 20 to 27 parts by weight of oxyalkylene units.

**3.** The process of Claim 1 in which the poly(oxyalkylene) polyol employed in (a) has polyether chains having the same weight ratio of oxyethylene units to oxyalkylene units as the mixture of ethylene oxide and substituted alkylene oxide metered into the reactor in (b).

**4.** The process of Claim 1 in which the substituted alkylene oxide is selected from the group consisting of propylene oxide, 1,2-butylene oxide, 2,3-butylene oxide and styrene oxide.

**5.** The process Claim 1 in which the substituted alkylene oxide is propylene oxide.

**6.** The process of Claim 1 in which a mixture comprising

(1) from 75 to 80 parts by weight of ethylene oxide per 100 parts by weight of (b)(ii)(1) plus (b)(ii)(2),
and
(2) from 20 to 25 parts by weight of at least one substituted alkylene oxide per 100 parts by weight of (b)(ii)(1) plus (b)(ii)(2),

is employed in (b).

**7.** The process of Claim 1 in which a low molecular weight starter compound with a hydroxyl functionality of from 1.0 to 8.0, DMC catalyst and the mixture comprising (b) (ii) (1) and (b) (ii) (2) are metered continuously, and wherein the mixture resulting from step (b) is removed continuously from the reactor or the reactor system at one or more suitable points.

**8.** A process for the production of a flexible polyurethane foam comprising reacting a polyisocyanate with the polyether polyol produced by the process of Claim 1 or 7.

**9.** Flexible polyurethane foam produced by the process of Claim 8.

## Patentansprüche

**1.** Verfahren zum Herstellen eines Polyetherpoylols, das zum Herstellen von flexiblen Polyurethan-Schaumstoffen geeignet ist, mit einer OH-Zahl von 15 bis 120 mg KOH/g, umfassend:

(a) Einführen eines Gemischs von DMC-Katalysator und einem Poly(oxyalkylen)polyol in einen Reaktor oder ein Reaktorsystem,
(b) kontinuierliches Einmessen von

(i) wenigstens einer Starterverbindung mit niedrigem Molekulargewicht mit einer Hydroxyfunktionalität von 1,0 bis 8,0 und einem anzahlgemittelten Molekulargewicht von 18 bis 1.000 g/mol
und
(ii) einem Gemisch umfassend

(1) von 73 bis 80 Gewichtsteile Ethylenoxid pro 100 Gewichtsteile von (b) (ii) (1) plus (b) (ii) (2)
und
(2) von 27 bis 20 Gewichtsteile an wenigstens einem substituierten Alkylenoxid pro 100 Gewichtsteile von (b) (ii) (1) plus (b) (ii) (2),

wobei das substituierte Alkylenoxid eine Verbindung der Formel (I) ist,

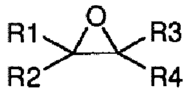

(I)

wobei
R1, R2, R3 und R4 unabhängig voneinander Wasserstoff, eine $C_1$-$C_{12}$-Alkylgruppe und/oder eine Phenylgruppe darstellen, mit der Maßgabe, dass:

(I) wenigstens einer der Reste R1 bis R4 nicht Wasserstoff darstellt und
(II) eine oder mehrere Methylengruppen in einem beliebigen $C_1$-$C_{12}$-Alkylrest durch ein Sauerstoffatom oder ein Schwefelatom ersetzt sein können,

in den Reaktor oder das Reaktorsystem, der/das das bei (a) eingeführte Gemisch enthält.

**2.** Verfahren gemäß Anspruch 1, wobei Oxyethyleneinheiten und Oxyalkyleneinheiten, die in dem bei (a) eingeführten Poly(oxyalkylen)polyol vorhanden sind, in Mengen von 73 bis 80 Gewichtsteile Oxyethyleneinheiten und von 20 bis 27 Gewichtsteile Oxyalkyleneinheiten vorhanden sind.

**3.** Verfahren gemäß Anspruch 1, wobei das bei (a) eingesetzte Poly(oxyalkylen)polyol Polyetherketten mit dem gleichen Gewichtsverhältnis von Oxyethyleneinheiten zu Oxyalkyleneinheiten wie das bei (b) in den Reaktor eingemessene Gemisch von Ethylenoxid und substituiertem Alkylenoxid aufweist.

**4.** Verfahren gemäß Anspruch 1, wobei das substituierte Alkylenoxid ausgewählt ist aus der Gruppe bestehend aus Propylenoxid, 1,2-Butylenoxid, 2,3-Butylenoxid und Styroloxid.

**5.** Verfahren gemäß Anspruch 1, wobei das substituierte Alyklenoxid Propylenoxid ist.

**6.** Verfahren gemäß Anspruch 1, wobei bei (b) ein Gemisch umfassend

(1) von 75 bis 80 Gewichtsteile Ethylenoxid pro 100 Gewichtsteile von (b)(ii)(1) plus (b) (ii) (2)
und
(2) von 20 bis 25 Gewichtsteile an wenigstens einem substituierten Alkylenoxid pro 100 Gewichtsteile von (b) (ii) (1) plus (b) (ii) (2)

eingesetzt wird.

**7.** Verfahren gemäß Anspruch 1, wobei eine Starterverbindung mit niedrigem Molekulargewicht mit einer Hydroxyfunktionalität von 1,0 bis 8,0, DMC-Katalysator und das Gemisch umfassend (b) (ii) (1) und (b) (ii) (2) kontinuierlich eingemessen werden und wobei das bei Schritt (b) erhaltene Gemisch bei einem oder mehreren geeigneten Punkten kontinuierlich aus dem Reaktor oder Reaktorsystem entnommen wird.

**8.** Verfahren zum Herstellen eines flexiblen Polyurethan-Schaumstoffs, umfassend Umsetzen eines Polyisocyanats mit einem durch das Verfahren gemäß Anspruch 1 oder 7 hergestellten Polyetherpolyol.

**9.** Flexibler Polyurethan-Schaumstoff, hergestellt durch das Verfahren gemäß Anspruch 8.

## Revendications

1. Procédé de fabrication d'un polyéther polyol, lequel convient pour la fabrication de mousses de polyuréthane flexibles, ayant un indice OH de 15 à 120 mg de KOH/g, comprenant :

    (a) l'introduction dans un réacteur ou un système réacteur d'un mélange de catalyseur de type cyanure métallique double (DMC) et d'un poly(oxyalkylène) polyol,
    (b) l'introduction en continu et en quantité contrôlée dans le réacteur ou le système réacteur contenant le mélange introduit dans (a)

        (i) d'au moins un composé de départ à faible masse moléculaire ayant une fonctionnalité hydroxyle de 1,0 à 8,0 et une masse moléculaire moyenne en nombre de 18 à 1 000 g/mol,
        et
        (ii) d'un mélange comprenant :

            (1) de 73 à 80 parties en poids d'oxyde d'éthylène par 100 parties en poids de (b)(ii)(1) plus (b) (ii) (2),
            et
            (2) de 27 à 20 parties en poids d'au moins un oxyde d'alkylène substitué par 100 parties en poids de (b) (ii) (1) plus (b) (ii) (2),

        l'oxyde d'alkylène substitué étant un composé correspondant à la Formule (I)

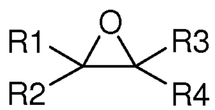

(I)

        dans laquelle
        R1, R2, R3 et R4, indépendamment l'un de l'autre, représentent un atome d'hydrogène, un groupe alkyle $C_1$-$C_{12}$ et/ou un groupe phényle, sous réserve que :

            (I) au moins un des radicaux R1 à R4 ne représente pas un atome d'hydrogène
            et
            (II) un ou plusieurs groupes méthylène dans n'importe quel radical alkyle $C_1$-$C_{12}$ puissent être remplacés par un atome d'oxygène ou un atome de soufre.

2. Procédé selon la revendication 1, dans lequel les unités oxyéthylène et les unités oxyalkylène présentes dans le poly(oxyalkylène) polyol introduit dans (a) sont présentes dans des quantités de 73 à 80 parties en poids d'unités oxyéthylène et de 20 à 27 parties en poids d'unités oxyalkylène.

3. Procédé selon la revendication 1, dans lequel le poly(oxyalkylène) polyol employé dans (a) comporte des chaînes polyéther ayant le même rapport pondéral des unités oxyéthylène contre les unités oxyalkylène que le mélange d'oxyde d'éthylène et d'oxyde d'alkylène substitué introduit en quantité contrôlée dans le réacteur dans (b).

4. Procédé selon la revendication 1, dans lequel l'oxyde d'alkylène substitué est sélectionné dans le groupe constitué de l'oxyde de propylène, de l'oxyde de 1,2-butylène, de l'oxyde de 2,3-butylène et de l'oxyde de styrène.

5. Procédé selon la revendication 1, dans lequel l'oxyde d'alkylène substitué est l'oxyde de propylène.

6. Procédé selon la revendication 1, dans lequel un mélange comprenant :

    (1) de 75 à 80 parties en poids d'oxyde d'éthylène par 100 parties en poids de (b)(ii)(1) plus (b) (ii) (2),
    et
    (2) de 20 à 25 parties en poids d'au moins un oxyde d'alkylène substitué par 100 parties en poids de (b) (ii) (1) plus (b) (ii) (2),

    est employé dans (b).

7. Procédé selon la revendication 1, dans lequel un composé de départ à faible masse moléculaire ayant une fonctionnalité hydroxyle de 1,0 à 8,0, un catalyseur DMC, et le mélange comprenant (b) ii) (1) et (b) (ii) (2) sont introduits en continu et en quantité contrôlée, et dans lequel le mélange résultant de l'étape (b) est retiré en continu du réacteur ou du système réacteur en un ou plusieurs points convenant à cette fin.

8. Procédé de fabrication d'une mousse de polyuréthane flexible, comprenant la réaction d'un polyisocyanate avec le polyéther polyol produit par le procédé selon la revendication 1 ou 7.

9. Mousse de polyuréthane flexible produite par le procédé selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5470813 A
- US 6696383 B
- EP 0700949 A
- EP 0743093 A
- EP 0761708 A
- WO 9740086 A
- WO 9816310 A
- WO 0047649 A
- WO 0064963 A
- EP 1097179 A
- EP 879259 A
- EP 912625 A
- DE OS2832253
- US 3404109 A
- US 3829505 A
- US 3941849 A
- US 5158922 A
- US 3652639 A
- US 4421872 A
- US 4310632 A
- US 1922451 A
- US 2674619 A
- US 1922459 A
- US 3190927 A
- US 3346557 A
- DE 2624527 A
- DE 2624528 A
- DE 2636787 A
- DE 1720633 A
- US 3330782 A
- DE 1030558 A
- DE 1804361 A
- DE 2618280 A
- DE 2523633 A
- DE 2732292 A
- DE 1229290 A
- DE 1769043 A
- DE 2062286 A
- DE 2062289 A
- DE 2117576 A
- DE 2129198 A
- DE 2330175 A
- DE 2330211 A
- DE 1769367 A
- US 3645927 A
- DE 2434185 A
- DE 2601082 A
- DE 2603834 A
- DE 4218840 A
- US 2834748 A
- US 2917480 A
- US 3629308 A
- DE 2558523 A
- US 2764565 A
- US 3178490 A
- US 3182104 A
- DE OS2121670
- DE OS2307589

### Non-patent literature cited in the description

- Justus Liebigs Annalen der Chemie. 1949, vol. 562, 75
- Reaction Polymers. Hanser Verlag, 1992, 66-96
- Kunststoffhandbuch, volume 7, Polyurethane. Hanser Verlag, 1993, vol. 7, 57-75
- Kunststoffhandbuch, volume 7, Polyurethane. vol. 7
- Kunststoff-Handbuch. Carl-Hanser-Verlag, 1966, vol. VII, 96-102
- Kunststoff-Handbuch. Carl-Hanser-Verlag, 1966, vol. VII, 103-113
- Kunststoff-Handbuch. Carl-Hanser-Verlag, 1966, vol. VII, 108, , 453, , 507
- Kunststoff-Handbuch. Carl-Hanser-Verlag, 1966, vol. VII, 121-205
- Kunststoffhandbuch. Carl Hanser Verlag, 1993, vol. VII, 148